Europäisches Patentamt

(19) European Patent Office

Office européen des brevets

(11) Publication number: **0 150 903**
**A2**

## (12) EUROPEAN PATENT APPLICATION

(21) Application number: 85300056.0

(22) Date of filing: 04.01.85

(51) Int. Cl.⁴: **G 06 K 11/06**

(30) Priority: 04.01.84 US 568045
10.12.84 US 680235

(43) Date of publication of application: 07.08.85
Bulletin 85/32

(84) Designated Contracting States: BE DE FR GB IT NL

(71) Applicant: CARROLL TOUCH TECHNOLOGY, INC.,
2800 Oakmont Center, Round Rock Texas 78664 (US)

(72) Inventor: Carroll, Arthur B., 207 Ridgewood Drive,
Georgetown Texas 78626 (US)
Inventor: Borovec, Richard T., 1216 West John Street,
Champaign Illinois 61821 (US)

(74) Representative: Gray, Robin Oliver et al, BARON &
WARREN 18 South End Kensington, London W8 5BU
(GB)

(54) Method and apparatus for dynamic alignment.

(57) A control arrangement for a video monitor (10) has a photoresponsive device (22) for responding to the position of a test pattern (18) which makes up part of the image (12) being displayed. Signals developed from the photoresponsive device (22) are used to modify the presentation of the monitor (10). Apparatus for controlling the position of a visual image (12) on the screen of the monitor (10) comprises means (28, 36) for generating the rest pattern (18), a photoresponsive device (22) mounted in fixed position relative to the screen of the monitor (10) and responsive to the test pattern (18) for developing signals manifesting the position of the test pattern (18) relative to a predetermined fixed position, and means (48) for modifying the position of the test pattern (18) on the screen (10) in response to said signals.

ACTORUM AG

-1-

METHOD AND APPARATUS FOR DYNAMIC ALIGNMENT

DESCRIPTION

The present invention relates to a method and apparatus for dynamically aligning the display image of a video monitor relative to a fixed frame of reference.

In the use of video monitors for computer systems, it is frequently desirable to provide a touch input capability, so that an operator, by touching a spot on the monitor screen with his finger, or the like, can make choices and otherwise supply input data to the computer system. The locations on the screen which are touched by the operator correspond to designated portions of the display, and input data is developed when the operator's finger or the like interrupts one or more light beams passing through the space adjacent that portion of the video screen. Typically, a plurality of crossed light beams are employed in the form of a matrix or grid, each of said beams being defined at one end by a light emitter, and at the other end by a photoresponsive device so that beam interruption by the operator's finger can be detected. Typically the beams employ light energy in the infrared region of the spectrum.

In order to resolve, without ambiguity, the input data furnished through a touch input device, there must be a fixed frame of reference existing between the light beams being interrupted when the operator points to a specific portion of the display. Unfortunately, because of various factors, the video display can drift in position relative to the grid of light beams which is fixed in space by being mounted in or on the bezel surrounding the video display screen. The drift can be vertical, in an up or down direction, or can be horizontal, in a left and right direction. When the drift exceeds a small value, errors may occur in the entry of data because when the operator touches a given point on the video display screen, the light beams are not interrupted which are correctly associated with that point. If other light beams are interrupted by the touch input, erroneous data may result.

-2-

Even when the touch input device does not employ light beams, its fixed relation to the monitor screen makes it desirable to maintain a fixed relation between the screen and the image being displayed. It is therefore desirable to provide an apparatus and method for insuring a fixed frame of reference relative to the display of the video monitor, and the grid of light beams of the touch input device.

It is a principal object of the present invention to provide an apparatus and method for insuring a fixed relationship between the display of a video monitor and the physical space surrounding such monitor.

Another object of the present invention is to provide an apparatus and method for doing so which is simple and economical.

The present invention achieves the advantage of maintaining a rigid relationship between the information displayed on the monitor and the field of a touch input unit which is fixed in space relative to the monitor. Any effects such as component aging, differences in the earth's magnetic field, or a change in the enclosure magnetization, or the like, which tend to result in a shift of a position of the display on the monitor are immediately compensated so that the image remains at a stationary position.

Another object of the present invention is to provide means for easily verifying correct size and linearity of the raster of a monitor screen.

These and other objects and advantages of the present invention will become manifest by an inspection by the following description and the accompanying drawings.

In accordance with one embodiment of the present invention there is provided apparatus for displaying a test pattern on a video monitor in the margin between the image area and the bezel, and photoresponsive means fixed in position relative to the face of the monitor for developing an electrical signal in response to the test pattern. The timing of the signal, in relation to the

-3-

display of the test pattern, establishes either that the image position is correct, or that the image must be moved in a given direction in order to return to its fixed position.

Reference will now be made to the accompanied drawings in which:

Fig. 1 is a view of the face of a video monitor displaying a test pattern in the margin between the image area and the bezel, with the photoelectric sensor removed;

Fig. 2 is a fragmentary view of the apparatus of Fig. 1, illustrating the photoelectric sensor in position;

Figs. 3 and 4 are illustrations showing the time and space relationships of the test pattern;

Fig. 5 is a functional diagram of a control system for controlling the image location;

Fig. 6 is an illustration of an alternative test pattern which may be used with the present invention;

Fig. 7 is an illustration of an alternative embodiment of the invention; and

Figs. 8-10 illustrate a further embodiment of the invention.

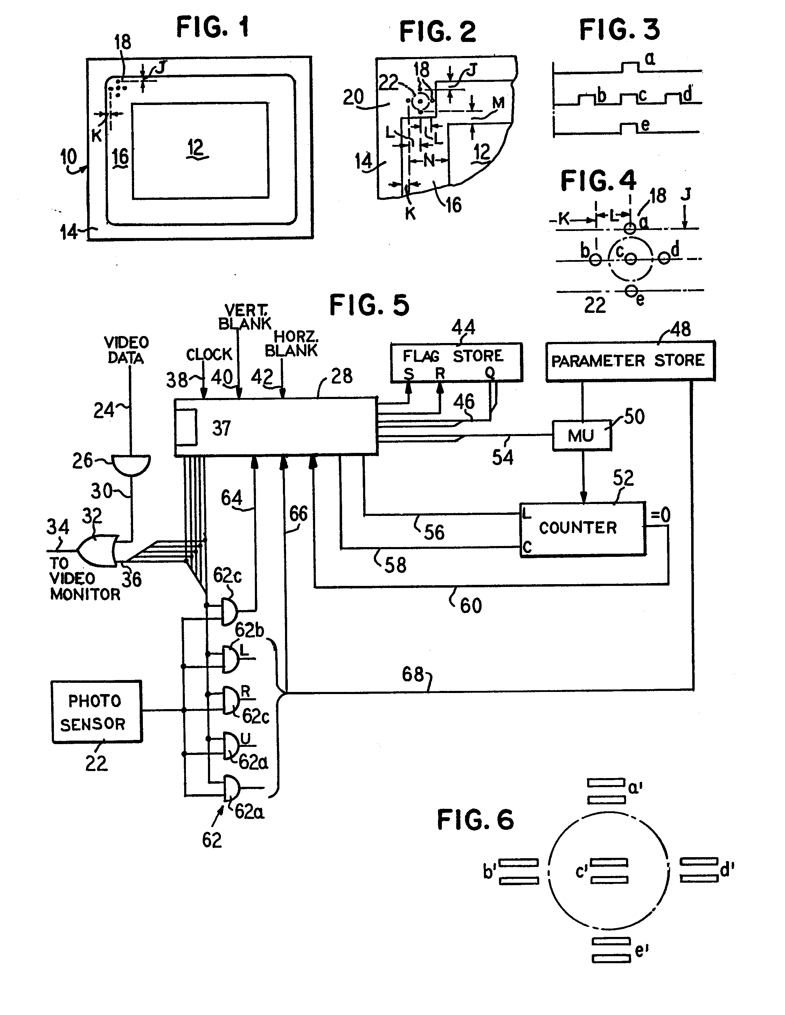

Referring now to Fig. 1, a video monitor 10 is illustrated having a display screen for displaying a video image 12. The display screen is surrounded by a bezel 14, which typically extends forwardly from the front surface of the monitor, and houses photoelectric emitters and photoelectric sensors for defining the grid or matrix of light beams of a touch input device. The specific details of the touch input device form no part of the present invention and therefore need not be described in detail.

A margin or border 16 surrounds the image area 12 on the monitor inside the bezel 14. Such a border is typically provided on computer system video monitors, to provide a positive indication to the operator that the entire image area 12 is displayed. As illustrated in Fig. 1, a test pattern 18 is displayed in the margin 16, such test pattern consisting of five dots arranged in two rows, one horizontal and one vertical. A central dot corresponds to the correct location of the image on the monitor, whereas the four additional dots indicate, respectively, positions of the image which are up, down, right and left of the correct position. The test pattern 18 is preferably located adjacent a corner of the display area 12, so that it is not in horizontal or vertical alignment with any part of the image area 12.

Referring now to Fig. 2, a fragment of the apparatus of Fig. 1 is illustrated, showing a housing 20 which houses a photoelectric sensor in alignment with the test pattern 18. When the image is correctly positioned on the monitor screen, the sensor is aligned with the central dot of the test pattern 18, whereas if the test pattern has moved from its desired position on the monitor screen, the central dot is no longer aligned with the photoelectric sensor, but one of the other dots may be so aligned. Each of the five dots of the test pattern has a characteristic timing, relative to the horizontal and vertical scanning of the raster of the video monitor, and a comparison between these times and the time at which the photoelectric sensor produces a pulse indicates which one or more of the five dots is in alignment with the sensor. This information may be used to identify the direction of movement required to bring the image to its desired fixed position, and also identifies when the desired fixed position is reached.

Referring now to Fig. 4, the test pattern 18 is shown in an enlarged view. As shown in Fig. 4, it appears on three successive scan lines, and the five dots are labeled a-e. The dot c is centrally located, relative to a photoelectric detector or sensor 22, while the other four dots a, b, d and e lie just outside the area of sensitivity of the sensor 22. However, when the image on the video monitor is shifted in position relative to the housing 20 in which the sensor 22 is mounted, one of the other four dots may be sensed by the sensor 22. If the image is too high on the screen, the dot e is sensed, while the dot a is sensed if the image is too low on the screen. If the image tends to move leftwardly, the dot d is sensed, while the dot b is sensed if the image tends to move rightwardly.

Fig. 3 illustrates waveforms of signals which are applied to the video input of the monitor 10 during three scan lines, with time as the independent variable A pulse corresponding to the dot a is applied while the first line is scanned. A similar pulse is applied corresponding to the dot c at the same time during the next scan line, while two additional pulses corresponding to dots b and d are applied to the monitor shortly before and shortly after the pulse for the c dot, respectively. In the third line, a pulse is applied corresponding to the e dot at the same relative time during the third scan as the a and c dots.

It will be appreciated from Figs. 3 and 4, that the five dots of the test pattern, although apparently continuously visible on the screen, are actually produced at individual times, so that by noting the time of occurrence of a pulse sensed by the photosensor 22, correct alignment may be recognized (when the c dot is detected) and otherwise misalignment in the up, down, left and right directions may be individually determined.

Fig. 5 illustrates an exemplary embodiment of a control arrangement which may be used to adjust the position of the image on the screen of the monitor 10, so as to align the c dot with the sensor 22.

Video data to be displayed in the image area 12 of the monitor is applied to a line 24 which is connected to an input of a gate 26. The second input of the gate 26 is connected to a gate array unit 28, such as a programmable logic array (PLA) or the like, and when the gate 26 is enabled by the signal from the gate array 28, the video data 24 passes over a line 30 through an OR gate 32 to a line 34 which is connected to the video input of the monitor. The five dots of the test pattern are supplied to additional inputs of the OR gate 32, so that they may be mixed with the video data and displayed on the screen in the form of a test pattern.

The five dots of the test pattern are produced by the gate array at times corresponding to the position illustrated in Fig. 1, relative to the image 12. In order to do this, the gate array 28 has a plurality of inputs, connected to a source of clock pulses over a line 38, to a source of vertical blanking pulses over a line 40, and to a source of horizontal blanking pulses over a line 42. The blanking pulses applied to the lines 40 and 42 are produced by the scanning circuit of the video monitor, and are adapted to blank the screen during retrace periods of vertical or horizontal scanning. They are used by the gate array 28 in order to synchronize generation of the signal applied to the gates 26 and 32 for placing the test pattern 18 and the image 12 on the screen at fixed positions relative to each other. Also connected to the gate array 28 is a storage unit 44 for storing a plurality of flags. The flags may take the form of conventional flip-flops, with set and reset inputs connected to outputs of the gate array 28, and with the states of the various flip-flops indicated by levels on a plurality of output lines 46.

A parameter storage unit 48 is also provided, and a multiplexer 50 is connected therewith to select one of a plurality of parameters for loading into a counter of 52. The multiplexer 50 is controlled by outputs over a line 54 from the gate array 28. A line 56, connected to an output of the gate array 28, causes the counter to be loaded with the content of a selected parameter stored in the storage unit 48, and signals over a line 58 from the gate array 28 cause the counter to be counted down. When the counter 52 reaches 0, a signal is produced on the line 60, which is furnished as an input to the gate array 28.

The five pulses corresponding to dots a-e are applied individually to five AND gates 62, each of which have a second input connected to the output of the photosensor 22. When the position of the image is correct, only the gate 62 c produces an output pulse, because the sensor 22 is stimulated only in response to the c dot. Otherwise, one or two of the OR gates 62a-62e produces a pulse, which pulse is connected to the gate array over a line 66. A pulse on the line 66 indicates that a correction of the position is required, while the pulse on the line 64 (without a pulse on the line 66) indicates that position is correct and that no correction is necessary.

The outputs of the OR gates 62 a, b, d and e are connected individually to the parameter store unit 48, for incrementing or decrementing the appropriate parameters stored in the storage unit 48 so as to shift the image and test pattern on the screen of the monitor. As shown in Fig. 1, a parameter K identifies the extreme left-hand position, relative to the end of the blanking interval, of the combined image 12 and test pattern 18. Modifying or changing the parameter K results in a shifting of the image 12 and test pattern 18 simultaneously to the left or to the right. Similarly, the parameter J identifies beginning lines of the test pattern 18. Increasing or decreasing the parameter J, has the effect of raising or lowering the image 12 and test pattern 18 simultaneously on the screen.

In one exemplary embodiment, the flag storage unit 44 contains 12 flag storage units, and the parameter store 48 stores 5 parameters J through N. In operation, all flags are initially reset, and the end of the vertical retrace blanking pulse causes the gate array 28 to set flag number 1, which loads the counter 52 with the parameter J, corresponding to the number of scan lines from the top of the raster to the top of the test pattern 18. Horizontal blanking pulses are then sent from the

-8-

line 42 to the line 58, and each pulse decrements the counter 52, or reduces it by one, and the counter signals the gate array 28 by a signal on line 60 when it reaches 0, indicating the scan line for the top of the test pattern has been reached.

Then flag number 2 is set, and the counter 52 is loaded with the parameter K, corresponding to the number of clock pulses from the left-hand edge of the raster to the left-hand edge of the test pattern. Clock pulses from the line 38 are then counted by the counter 52, and when J pulses have been counted, the gate array is signaled by a signal on the line 60, and the gate array sets flag number 3.

Parameter L (Fig. 4) is then loaded in the counter 2, which corresponds to the number of clock pulses between the left-hand edge of the test pattern and the center of the test pattern. When the counter 52 again reaches 0, the beam of the CRT or scanning point of the monitor is located at the position of dot a, and the gate array 28 produces a pulse on the line 36 which causes the monitor to display the dot a. The pulse can be produced by a monostable multivibrator 37 having a short time period if desired. Assuming that the image is in correct alignment on the monitor screen, no pulse is detected by the photosensor nor produced on the line 66, and operation continues. Flag number 4 is set, and when the next horizontal blanking pulse arrives, the counter 52 is loaded with the parameter K. Then K clock pulses are counted by the counter 52, after which a pulse corresponding to dot b is produced on the line 36. If the position is correct, no pulse is produced on the line 66 at this time.

Flag number 5 is set, and the counter is loaded with the parameter L and caused to count L clock pulses until the beam is at the center position of the test pattern. Then a pulse is produced on the line 36 corresponding to dot c. Flag 6 is set, and the counter 52 is again set to the parameter L, and conditioned to count clock pulses until the position of dot d is reached by the beam. At this time another pulse corresponding to the dot d is produced on the line 36. Flag number 7 is set, and when the next horizontal blanking pulse arrives, the parameter K is loaded into the counter 52, so that K clock pulses are counted until the left-hand test pattern position on the third scan line is reached. Flag 8 is then set, and the parameter L is loaded into the counter 52, and the counter 52 is counted down with L clock pulses to reach the location of dot e. At this point a pulse is produced on the line 36 to display dot e.

Each time a dot-representative pulse is produced on the line 36, the lines 64 and 66 are examined for coincidence. If the position is correct, a pulse is produced on the line 64 during each cycle (between vertical blanking pulses) but not on the line 66. For any misalignment, a pulse is produced on both lines, or on the line 66 alone in case of more serious misalignment.

Following the inspection of dot e for coincidence, flag 9 is set, and the counter 52 is set to parameter M (Fig. 2), corresponding to the number of horizontal blanking pulses between the third line of the test pattern and the top of the image. Flag number 10 is then set on the next horizontal retrace, and the counter 52 loaded with parameter K, and caused to count K clock pulses at which time the beam of the CRT has reached alignment with the left-hand edge of the pattern. Flag number 11 is then set and the counter is loaded with parameter N (Fig. 2) corresponding to the number of clock pulses between the left-hand edge of the test pattern and the left-hand edge of the image 12. The counter of 52 is then counted down by clock pulses until it again reaches 0, at which time the flag 12 is set.

When flag 12 has been set, the beam has reached the upper left-hand corner of the image area 12, and a line of data may be output to the monitor by enabling the

-10-

gate 26.  This occurs in the conventional manner.

Subsequent horizontal blanking pulses update a line counter (not shown) which addresses a random access memory, and makes successive lines available for transmission to the monitor through the gate 26.  This is repeated for each line to be displayed, and an indication of the last line displayed is manifested by a line counter (not shown) in the conventional fashion. At each horizontal retrace pulse, flags 11 and 12 are reset, so that the operation is repeated from the setting of flag 10.  Namely, the counter 52 is loaded with the parameter K, and counts clock pulses to the left-hand margin of the test pattern, after which the counter is loaded with parameter N and continues to count until the left-hand margin of the image area 12 is reached. Thus, each image line begins at a position determined by K + N.  The first line of the image begins at J + 2 + M, where the second term corresponds to the height of the test pattern 18, i.e., two scanning lines.

When all lines have been displayed, the entire operation described above is repeated beginning with the next vertical blanking pulse.

From the above description, it is apparent that the parameter J determines the vertical position of the test pattern and the image 12, while the parameter K determines the horizontal position thereof.  Accordingly, if the gate 62b produces a pulse, corresponding to a leftward position of the image, the signal on one of the line 68s causes the parameter store 48 to increment (or increase by one) the parameter K, thus moving the image one clock pulse to the right.  If the image is too far to the right, however, the signal from the gate 62d causes the parameter K to be decremented.  In similar fashion, signals from the gates 62a and 62d cause the parameter J to be incremented or decremented as necessary to bring the image into correct position.  It will be appreciated that the modification of parameter J and K has the effect of

-11-

shifting the test pattern 18 and the image area 12 together, so that the two are maintained in correct physical position relative to each other. This fixed position can be changed, if desired, by modifying the parameters M and N which define the image area 12 in relation to the test pattern. By this means, the relative positions between the test pattern and the image area can be adapted to accommodate the particular characteristics of any individual monitor. In addition the parameter L can be modified, if desired, in order to change the horizontal spacing of dots b, c and d in the second scan line of the test pattern. Also, the test pattern may be made greater in height by separating the three scan lines of the test pattern by one or more lines. If desired, an additional parameter may be stored to identify the spacing between scan lines of the test pattern, with additional flags provided to accommodate counting down the counter 52 in accordance with the extra parameters.

In the above description, it is assumed that the test pattern is formed on three individual scan lines, however, it is apparent that a larger test pattern may be employed in which the individual dots each occupied portions of two or more scan lines. This facilitates use of the present invention with monitors having extremely narrow and well defined scan lines. This modification may be arranged to employ the test pattern shown in Fig. 6, for example, in which each of the five "dots" a' - e' of the test pattern is made up of two short dashes in successive scan lines. Alternatively, dashes or bars oriented both horizontally and vertically may be used to facilitate concurrent alignment in both X and Y directions. It will be apparent that the gate array 28 can be converted to produce the test pattern of Fig. 6 by simply providing more flags in the flag store 44 and an additional parameter in the parameter store 48 corresponding to the number of blank scan lines between rows of "dots" in the test pattern. The sensing of the "dots" and the response

-12-

thereto is the same as described in connection with Fig. 5, except that each of the gates 62a-62e has inputs corresponding to the successive lines. The monostable multivibrator 37 has its period adjusted to produce pulses corresponding to dashes of the appropriate length.

From the foregoing it will be apparent that the method and apparatus of the present invention is effective to maintain correct positioning of the image area 12 relative to the physical space surrounding of a video monitor. In this way, changes in position, which may be brought about by aging of components or the like, do not interfere with the correct operation of a touch input system associated with the monitor.

The photosensor 22 of the present invention may also be used to develop signals for maintaining the size of the image constant, thus tending to reduce changes in size which may result from variations in the output voltage of the power supply of the monitor. When such output voltage declines, the vertical and horizontal size of the image tends to be enlarged, spreading apart the dots of the test pattern. If the vertical size of the image area decreases so as to cause the photosensor 22 to sense simultaneously the three dots a, c, e, or the three dots b, c, d, recognition of this condition may be used to send a signal to a unit which adjusts the gain of the horizontal and vertical sweep amplifier circuits, to restore the image area 12 to the appropriate size. Since such an arrangement employs only common feedback techniques, it is not described in detail. Then parameters J and K may be modified, if necessary, in the manner described above, to insure that the position of the image area is correct.

While the gate array has been illustrated in Fig. 5 as an exemplary embodiment of the present invention, it is apparent that the sequence of operations described may be carried on by means of a microprocessor unit under program control. Alternatively, individual gates and flip-flops may be used for the gate array 28.

In addition the gates 26, 32 and 62, as well as the gates making up the multiplexer 50 may be incorporated into the gate array 28. Also, if desired, the flip-flops or other storage units making up the flag store 44 and the counter 52 may also be incorporated into the same integrated circuit with the gate array if desired. Although the parameter store 48 may also be incorporated into the same unit, it may be desirable in some cases to maintain it separate from the gate array 28, to facilitate permanent storage of the various parameters, as well as to facilitate their being incremented and decremented. The parameter store 48 may conveniently be part of the random access memory or read only memory of a microprocessor system, and these parameters may be incremented and decremented when necessary by the use of the register set available in such microprocessor system. Alternatively, a separate processor may be employed for monitoring the test pattern and adjusting the parameters so that these operations are carried out rapidly and accurately.

To facilitate use of the present invention with tubes having long persistence phosphorous, a differentiator circuit may be used with the photosensor 22, to produce a pulse in response to an abrupt change in the screen intensity instead of an output responsive to level only. A conventional circuit may be connected for this purpose between the output of the photosensor 22 and the gate 62.

It is also possible to employ the present invention to stabilize the size of a raster as it appears on a CRT screen. For this purpose a circuit is preferably provided for adjusting the scan speed of the horizontal scan lines in response to recognition of a situation in which one or more columns of the test pattern are out of their expected positions. Assuming the line time is held constant, increasing the scan speed decreases the horizontal and vertical size of the raster, and vice versa. Preferably the video amplifier of the monitor has substantially constant characteristics with the range of variation in scan speed, i.e., the band width is sufficient to accommodate a faster scan speed, etc. Also, the blanking interval is preferably adjusted to maintain the display centered on the monitor screen. Similarly, a circuit for adjusting the inter-line spacing by adjusting the length of the blanking interval may be made responsive to a condition in which one or more rows of the test pattern are out of their expected positions. Such circuits are well known in the CRT art and need be modified only by including a component which has variable parameters in response to a control signal from the pattern scanning apparatus.

It is also within the framework of the present invention to provide two sensors at spaced locations on the screen, e.g., adjacent the top border and one side border. The spacing between the two sensors helps to increase the accuracy of maintaining a  raster with uniform horizontal and vertical dimensions.

The invention can also utilize three or more sensors at spaced locations along a scan line, for example, to verify horizontal deflection linearity. The time interval between arrival of the scanning spot at spaced sensors is proportional to  the distance of their spacing for linear conditions. Arrival at a sensor before or after the expected time indicates a nonlinear condition, and the sign of the correction required. The same technique may be used to monitor vertical linearity as well. In both cases conventional circuits may be used for effecting a correction in the waveforms of the deflection voltage or current.

In the case of a raster having an interlaced display, the apparatus of the present invention is preferably modified to enable the test pattern to be displayed partly in each of two successive frames. For this purpose the scan lines may be counted so that the appropriate lines of successive frames can trigger the pattern

0150903

-15-

scanning apparatus to recognize the appropriate parts of the pattern.

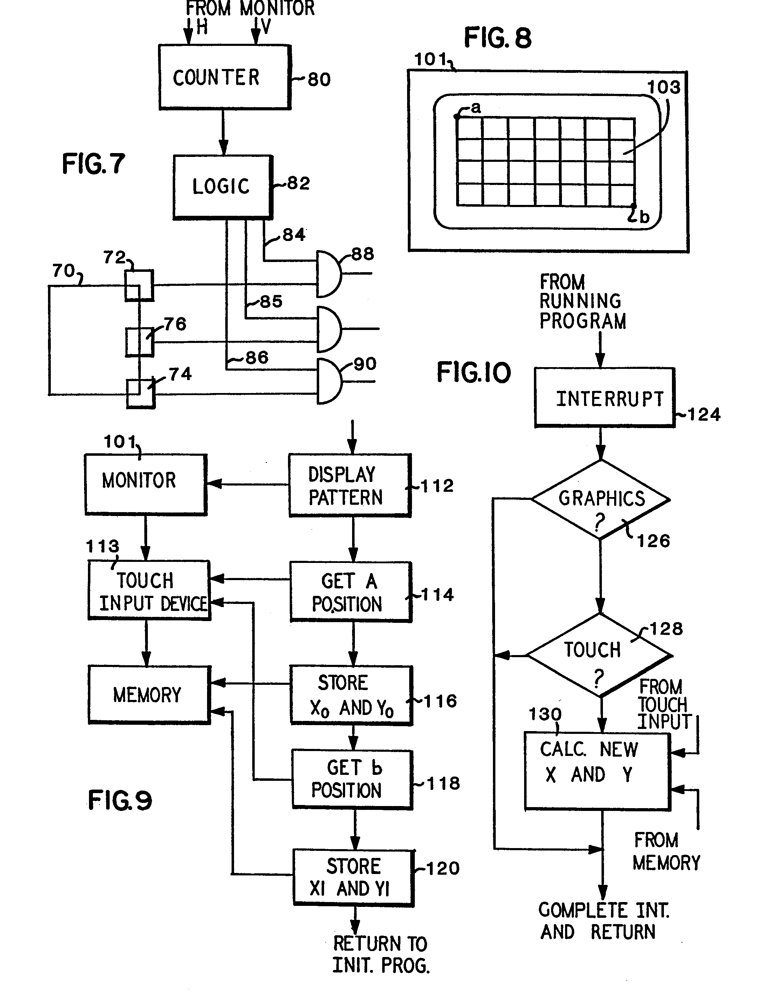

Referring now to Fig. 7, an illustration of an alternative embodiment of the invention is illustrated. A raster 70 of a CRT monitor is illustrated diagrammatically, and two sensors 72 and 74 are positioned in alignment with the upper and lower edges of the raster, respectively. The correct height of the raster is assured when the sensors 72 and 74 are energized by light from the scan line coincident with the first and last scan lines of the raster. The position of the top scan line is verified when the sensor 72 produces a pulse during the time of the first scan line, and the sensor 74 produces a pulse during the time of the last scan line. This coincidence can readily be detected by using a counter 80 to count horizontal blanking pulses, and the counter is reset by each vertical blanking pulse, or by alternate vertical blanking pulses in the case of interlaced scanning. A logic unit 82 is connected to the counter 80 and produces signals on output lines 84 and 86 when the state of the counter 80 coincides with the first and last lines of the raster.

These lines are connected to one input each of AND gates 88 and 90, which receive their other inputs from the sensors 72 and 74. When output signals are produced by both gates 88 and 90, the correct height of the raster is verified.

When a third sensor 76 is positioned between the sensors 72 and 74, vertical linearity of the raster can be verified by gating the output of the sensor 76 with an output on line 85 of the logic unit 82, which corresponds to the time of the scan line at the position of the sensor 76 when the vertical linearity is correct.

The present invention may also be employed to automatically compensate for variations in combinations of software and hardware. For example, a combination may include a video display unit having touch input capability and a computer program designed to receive input data by way of the touch input. In one arrangement, the computer program has an initialization program which is run prior to use of any touch input data. The initialization program operates to display a grid on the video display screen, and instructs the operator to touch two or more indicated points on the grid. When the operator does so, the electrical signals generated by the touch input system, which are indicative of the x and y coordinates of the positions of the video screen which are touched, are used to effect correlation of subsequent data in relation to the physical parameters of the video display screen.

Referring to Fig. 8, a video display screen 101 is illustrated, with a grid 103 displayed on the screen having diagonally opposite points a and b. When the operator touches the point of the video display screen corresponding to point a, digital signals are produced which are indicative of the x and y position of point a. Similarly, when point b is touched by the operator, a different set of signals is produced indicating the physical coordinates of point b on the display screen. Preferably, when the pattern illustrated in Fig. 8 is displayed, the video display unit is in a graphics mode in which each of the many points which may be separately displayed on the screen can be independently addressed. For example, the commercially available IBM PC has a graphics mode which allows for the display, from bit-mapped memory of 200 rows of dots, each row containing 640 dots spaced along the length of the line. In this case, the pattern illustrated in Fig. 8 may be displayed with the upper left-hand corner (the dot position a), displayed in the 15th column of the fifth row, with the lower righthand corner (corresponding to dot position b), displayed in the 195th row at the 625th column. This allows for the possibility that the video display screen in use may have sufficient overscan so that the extreme corners of the pattern may not be visible on the screen.

With the pattern of Fig. 8 displayed on the screen, the operator touches the screen at position a, and digital signals are produced indicating the x and y coordinates of this position. For example, assume that the actual positions on the screen correspond to row number 8 and column number 17, indicating an offset of three rows and two columns. Subsequently, when the position b is touched, assume that the x and y coordinates derived therefrom are indicative of the 194th row in the 624th column, indicating a one row and one column displacement from the expected position. This data is then subsequently used by the operating program to compensate in such a way that when a position input is received from the touch input of the video display screen corresponding to the 8th row and the 17th column, that is recognized to correspond to the program position corresponding to the 5th row in the 15th column. Corresponding adjustments are made elsewhere throughout the entire area of the video display screen by means of the following relationships, where x and y are the current position inputs from the touch input device, $x_0$ and $y_0$ are the position inputs for point a, and x1 and y1 are the position inputs for point b:

$$\text{New } x = (x - x_0) * (625-15)/(x1 - x_0) + 15$$
$$\text{New } y = (y - y_0) * (195-9)/(Y1 - Y_0) + 5$$

Fig. 9 illustrates an initialization program in which the data used for compensating the display screen position may be derived. The program receives its input from a program step of the initialization program, which when completed passes control to unit 112 to display the pattern illustrated in Fig. 8. Control is then passed to unit 114 which causes the touch input device 113 to get the digital input signals indicating the position of point a, after which unit 116 causes parameters corresponding to $x_0$ and $y_0$ to be stored. Then units 118 and 120 perform the same operation for input b, and parameters x1 and y1,

-18-

after which control returns to the normal initiation sequence. Fig. 10 illustrates a program making use of the correlation data. Assuming a running program which requires data to be accepted from the touch input of the display screen, when the touch input is activated, an interrupt unit 124 receives control, storing the position of the running program so that the current instruction of the running program, can be later resumed at that point. The interrupt unit 124 passes control to unit 126 which determines whether the display screen is in its graphics mode and if so, passes control to unit 128 which determines whether the interrupt is one which requires a touch input. If so, control is passed to unit 130 which calculates and stores new values for x and y, by means of the above expressions from the touch input data, thereby correcting any inconsistency between the program and the display screen being actually used.

If either units 126 and 128 indicate that the video screen is not in its graphics mode, or that touch input is not desired, control passes immediately to the next step in the normal interrupt routine. Otherwise, unit 130 passes control to interrupt routine, after which control is returned to the next step in the running program, via an interrupt return or the like. As a result, the running program, which requires position data as a result of touch input, is able to interpret the touch input data irrespective of the characteristics of the individual video display unit.

It will be apparent to those skilled in the art that various other modifications and additions may be made in the apparatus and method of the present invention, which is intended to be defined and secured by the appended claims.

CLAIMS:

1. Apparatus for controlling the position of a visual image on the screen of a video monitor, comprising; means for generating a test pattern in fixed relation to said visual image, a photoresposive device mounted in fixed position relative to the screen of said monitor and responsive to said test pattern for developing signals manifesting the position of said test pattern relative to a predetermined fixed position, and means for modifying the position of said test pattern on said screen in response to said signals.

2. Apparatus according to claim 1 wherein said test pattern comprises a plurality of dots on a plurality of scanning lines of said monitor, and said apparatus for generating said test pattern comprises means for supplying a sequence of pulses to said video monitor at times corresponding to the positions of said dots on said monitor screen.

3. Apparatus according to claim 2 wherein said photoresponsive device is adapted to produce a signal responsive to one of said pulses when said test pattern is correctly positioned, and in response to one or more others of said dots when said pattern is incorrectly positioned.

4. Apparatus according to claim 3 wherein said test pattern comprises a plurality of separated dots forming at least one row and at least one column, and said photoresponsive device is responsive to the presence of dots in an area defined by a vertical or horizontal dimension which is greater than the distance between two adjacent dots.

5. Apparatus according to claim 1, including means for mounting said photoresponsive device in fixed

-20-

position relative to the screen of said monitor.

6. Apparatus according to claim 1, including a parameter store for storing parameters corresponding to the vertical and horizontal positions of said image area, and means for modifying said parameters in response to signals from said photoresponsive device.

7. Apparatus according to claim 6, including means for incrementing or decrementing one of said parameters in response to a signal from said photoresponsive device corresponding to a position of said image area different from said predetermined fixed position.

8. A method of maintaining the image area of a video monitor in a predetermined fixed position, comprising the steps of; displaying a test pattern on the screen of said video monitor in fixed relation to said image area, inspecting the position of said test pattern relative to a fixed position on the screen of said monitor, and adjusting the position of said test pattern and image area together to bring said test pattern into alignment with said predetermined fixed position.

9. The method according to claim 8 including the step of generating said test pattern in the form of a plurality of spaced dots, employing a photoresponsive device for inspecting said test pattern, and moving the position of said image in accordance with the relationship between said dots and said photoresponsive device.

10. The method according to claim 9 including the step of forming said dots by supplying a plurality of pulses to said video monitor during the periods of a plurality of scan lines.

11. Apparatus according to claim 1, wherein

-21-

said photoresponsive device comprises plural photodetectors spaced apart both horizontally and vertically on said screen.

12. Apparatus according to claim 1 wherein said test pattern is composed of plural parts, and including means for developing signals corresponding to alignment of one of said parts and misalignment of another of said parts, to identify a variation in size of the raster of said video monitor.

13. Apparatus for verifying placement of a visual image on the screen of a video monitor, comprising; a photoresponsive device mounted in fixed position relative to the screen of said monitor and responsive to light produced by said monitor, at a predetermined location thereof, and means for producing an output signal in response to energization of said photoresponsive device at a predetermined time, whereby said output signal verifies an operational characteristic of said monitor relative to the placement of said image.

14. Apparatus according to claim 13, wherein said photoresponsive device is placed at the normal position of a predetermined scan line of the raster of said monitor.

15. Apparatus according to claim 14, including means for generating a test pattern on said monitor at said predetermined scan line.

16. Apparatus according to claim 13, including a pair of said photosensitive devices, said devices each being mounted at the normal positions of two different scan lines of the raster of said monitor, whereby the physical distance between said two scan lines can be verified.

-22-

17. Apparatus according to claim 13, including three photosensitive devices, each of said devices being mounted at the normal positions of three different scan lines of said monitor, whereby the vertical linearity of said raster can be verified.

18. A method of verifying placement of a visual image on the screen of a video monitor, comprising the steps of; placing a photoresponsive device at a predetermined physical position adjacent the face of said monitor, and comparing the time of energization of said photoresponsive device with a predetermined time, whereby an operational characteristic of said monitor is verified, relative to the placement of said visual image thereon.

19. The method according to claim 18, including the step of generating a test pattern on said monitor at the scan line normally corresponding to the position of said photoresponsive device.

20. The method according to claim 18, including the steps of placing two of said photoresponsive devices at the normal positions of two different scan lines of the raster of said monitor, whereby a height characteristic is verified.

21. The method according to claim 18, including the step of placing three of said photoresponsive devices at the normal positions of three different scan lines of the raster of said monitor, whereby a vertical linearity characteristic is verified.

22. Apparatus for correlating the position of a visual image on the screen of a video monitor having a touch input capability comprising, means for generating a test pattern in fixed relation to said visual image,

-23-

touch input means for generating signals indicative of the position of said video monitor when its surface is touched, and means for storing data correlating a specific point of said test pattern with the position which is touched, whereby said correlation data may be used to compensate for variations in the positions of said test pattern caused by physical characteristics of said video monitor.

23. Apparatus according to claim 22 wherein said test pattern incorporates at least two points spaced apart horizontally and vertically on said screen.

24. Apparatus according to claim 22 wherein said means for storing incorporates means responsive to signals from said touch input means for storing data corresponding to said signals and including means responsive to subsequent position data supplied by said touch input means for adjusting said subsequent position data in accordance with said stored data.

25. A method of correlating the position of a visual image on the screen of a video monitor having a touch input capability comprising the steps of generating a test pattern in fixed relation to said visual image, devising data representative of particular positions of said test pattern, storing said data, and referring to said stored data each time subsequent position data is provided by the touch input capability of said monitor, and using said stored data to compensate for variations in the positions of said test patterns caused by physical characteristic of said video monitor.

26. The method according to claim 25, including the step of storing data representative of two points of said test pattern which are spaced apart horizontally and vertically.

-24-

27. The method according to claim 25, including the step of using said stored data to adjust each item of subsequent position data for modifying such position data in accordance with the physical characteristics of said video monitor.

# FIG. 1

18
J
10
K
16
12
16
14

# FIG. 2

20
22
18
J
L
L
L
M
N
12
14
16
K

# FIG. 3

a
b    c    d
e

# FIG. 4

K    L    a    18    J
b    c    d
22    e

# FIG. 5

VIDEO DATA

VERT. BLANK

CLOCK    HORZ. BLANK

38    40    42    28

FLAG STORE    44
S    R    Q
46

PARAMETER STORE    48

37

MU    50

54

24

26

30

64    66

56

COUNTER    52
L
C    =0

34    32

58

TO VIDEO MONITOR    36

60

62c

62b
L

68

PHOTO SENSOR

R
62c

U
62a

22

62a

62

# FIG. 6

a'

b'    c'    d'

e'

**FIG. 7**

FROM MONITOR
H    V

COUNTER ～80

LOGIC ～82

84
85
86

70
72
76
74

88
90

**FIG. 8**

101
103
a
b

**FIG. 9**

101
MONITOR

DISPLAY PATTERN ～112

113
TOUCH INPUT DEVICE

GET A POSITION ～114

MEMORY

STORE $X_0$ AND $Y_0$ ～116

GET b POSITION ～118

STORE XI AND YI ～120

RETURN TO INIT. PROG.

**FIG. 10**

FROM RUNNING PROGRAM

INTERRUPT ～124

GRAPHICS ? ～126

TOUCH ? ～128

130
CALC. NEW X AND Y

FROM TOUCH INPUT

FROM MEMORY

COMPLETE INT. AND RETURN